# EUROPEAN PATENT SPECIFICATION

(11) **EP 2 660 620 B1**
(45) Date of publication and mention of the grant of the patent: **27.12.2017**
(21) Application number: 13166411.2
(22) Date of filing: 03.05.2013
(51) Int. Cl.: G01S 13/88, G01S 7/02

(54) **Device for warning of radar traps**
Vorrichtung zur Warnung vor Radarfallen
Dispositif pour avertir de pièges de radar

(30) Priority: 04.05.2012 NL 2008757
(43) Date of publication of application: 06.11.2013
(73) Proprietor: Stichting Noble House, 2182 DZ Hillegom (NL)
(72) Inventor: de Wilde, Tom Marnix Alexander, 2182 DZ Hillegom (NL); Dijkstra, Patrick, 3465 TJ Driebruggen (NL)
(74) Representative: Vernout, Robert

(56) References cited:
- US-A- 5 068 663
- US-A- 5 323 161
- US-A- 5 666 120

## Description

The present invention relates to a device for warning of radar traps, comprising a radar detection antenna, a central processing unit, which is connected to the radar detection antenna, an alert device, which is connected to the central processing unit and which is designed for delivering an alarm, wherein the central processing unit is designed for determining at least one characteristic of the signal received by the radar detection antenna and for causing the alert device to deliver an alarm or suppress the delivery of an alarm in dependence on said at least one determined characteristic.

US 5,666,120 discloses such a device wherein the at least one characteristic comprises the modulation frequency or the frequency sweep of a frequency modulation on the signal received by the radar detection antenna.

Radar detectors for detecting police radar speed measurement systems are currently faced with a great deal of trouble in the form of false alarms caused by all kinds of high-frequency sources that use the same radar frequency bands as those used by police speed measurement equipment. Especially (but not exclusively) the 24 GHz band is frequently used for alternative applications, such as radar devices for opening automatic sliding doors, flow measurement systems beside roads and motorways, blind spot radars and adaptive cruise control devices on board vehicles, etc.

A known method for distinguishing between false alarms and real police radar speed measurement systems makes use of a database in which the GPS locations of false alarms are stored. The degree of distinction between police traps and false alarms achieved with this method is limited, however.
The object of the present invention is to provide a system by means of which it is possible to distinguish between false alarms and real police radar systems independently of, or in addition to, a database comprising known false alarms, and/or by means of which police radar systems so far unknown can be more readily distinguished.

Said at least one characteristic comprises the structure of the amplitude of the signal received by the radar detection antenna over a predetermined distance covered by the vehicle; and/or the modulation frequency of an amplitude modulation on the signal received by the radar detection antenna; and/or the modulation depth of an amplitude modulation on the signal received by the radar detection antenna; and/or the modulation frequency of a frequency modulation on the signal received by the radar detection antenna; and/or the frequency sweep of a frequency modulation on the signal received by the radar detection antenna; and/or the phase of a phase modulation on the signal received by the radar detection antenna; and/or the modulation frequency of a phase modulation on the signal received by the radar detection antenna; and/or the duty cycle of a pulse modulation on the signal received by the radar detection antenna; and/or the modulation frequency of a pulse modulation on the signal received by the radar detection antenna; and/or the frequency stability of the signal received by the radar detection antenna; and/or the phase noise of the signal received by the radar detection antenna.

By determining one or more of said characteristics of the radar signal, it is possible to determine the probability that the delivery of an alarm is or is not wanted and based on said determination the device may or may not deliver an alarm. Based on said information it is furthermore possible to determine what kind of alarm is to be delivered, for example an alarm having a high or a low priority. Furthermore, the measured characteristics of the radar signal can be combined with other characteristics detected by the system, such as the presence of a signal from a portable transmitter-receiver (which indicates police presence).

The central processing unit is preferably designed for determining at least two, more preferably at least three, even more preferably at least four and most preferably all the aforesaid characteristics, and the central processing unit is designed by means of an algorithm for causing the alert device to deliver an alarm or suppress the delivery of an alarm in dependence on a combination of the determined characteristics.

The algorithm is preferably a fuzzy logic algorithm. According to the algorithm, a measured value is preferably allocated to each of the determined characteristics, and said measured values are each multiplied by a weighting factor allocated to the characteristic in advance, which weighting factors have been made dependent on the values of the characteristics in accordance with predetermined dependence functions so as to obtain weighted characteristic values, whereupon the weighted characteristic values are added to obtain a signal profile value, after which the signal profile value is compared to at least one threshold value, wherein, depending on the outcome of the comparison between the signal profile value and the threshold value an alarm is delivered or suppressed. Preferably, the threshold values are adjustable (possibly by the user), so that a more sensitive or a less sensitive system can be obtained.

On the basis of the thus determined profile of the received signal, it can be directly decided by means of the decision algorithm whether the signal in question concerns a false radar signal or an actual police radar trap.

Said at least one characteristic preferably comprises at least the frequency stability and/or the phase noise of the signal received by the radar detection antenna. Besides said at least one characteristic, the determined characteristics further comprise the frequency of the signal received by the radar detection antenna.

Preferably, the system comprises a database of known profiles of radar signals that are specific for certain police radar speed measurement systems. Based on said list, an alarm can be directly generated as soon as a radar signal, within a certain tolerance, corresponds to a known police radar profile from the database. The radar detector system may also indicate the type and/or make of the police radar speed measurement system, for example in the form of a text on a display or in the form of a spoken text.

Likewise preferably, the system comprises a database of known profiles of false radar signals that are specific for certain false alarm applications, such as radar systems for door openers or flow measurement systems. Based on said list, a received radar signal can be directly recognised as false and be suppressed as soon as the radar signal, within a certain tolerance, corresponds to a known false alarm radar profile from the database.

Preferably, the device comprises input means by means of which the user can indicate if the delivery of an alarm is to be suppressed and/or if an alarm is to be delivered upon detection of a radar signal, thereby changing the aforesaid algorithm.

Preferably, said algorithm is changed by changing one or more of the aforesaid predetermined dependence functions of the weighting factors. This can for example be done in that the user presses a button upon delivery of a radar alarm signal to indicate that the radar in question is a police radar. Based on said information, the system knows what profile properties are associated with the police radar system in question. The result is that the next time a radar signal having the same (or practically the same) profile properties is received, the radar alarm can be recognized as emanating from a police radar trap, so that an alarm can be generated. This information can be shared between users via a network.

According to the invention the system comprises a self-learning function, wherein the values of the determined characteristics of each detected signal are stored in a database, and wherein it is determined on the basis of an analysis of the stored characteristics to what extent signals correspond to known signals, and in the case that signals correspond to known signals, said signals are allocated the same status as the known signal so as to cause an alarm to be delivered or suppressed upon detection of said signal. This information, too, can be shared between users via a network.

The invention will be explained in more detail with reference to a preferred embodiment shown in the figures.
Figure 1 is a schematic block diagram of a device according to the invention;
Figure 2 shows an example of an algorithm that is used according to the invention; and
Figure 3 shows an example of the determination of weighting factors for use in the algorithm of figure 2.

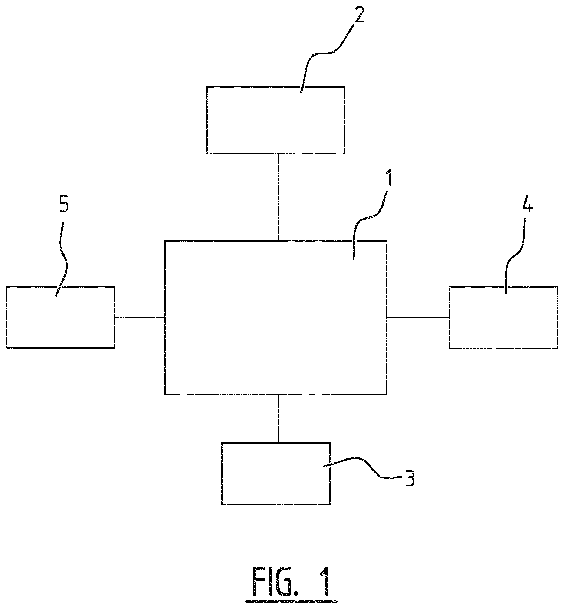

According to figure 1, a device for warning of radar traps comprises a radar detection antenna 2, a central processing unit 1 provided with a digital signal processing unit, which is connected to the radar detection antenna 2, and a user interface 3 connected to the central processing unit 1. The user interface 3 comprises a display screen and a loudspeaker; it is to function as an alert device, to which end it is capable of delivering an acoustic and/or visual alarm.

The central processing unit is designed for determining characteristics of the radar signal received by the radar detection antenna and causing the alert device to deliver an alarm or suppress the delivery of an alarm in dependence on said characteristics.

The device makes use of a receiver of a quality that is needed to enable the digital signal processing unit to accurately analyse the received radar signal. This takes place with known techniques, such as digital filtering (digital radio), demodulation of the received signal and FFT analysis of the detected signal.

The profile of the detected radar signal is determined by examining the received signal for the following signal properties:
1) the frequency of the signal;
2) the amplitude of the signal, or the maximum amplitude that occurred upon passing the radar source;
3) the structure of the amplitude of the signal over a predetermined distance covered by the vehicle;
4) the modulation frequency of an amplitude modulation on the radar signal;
5) the modulation depth of an amplitude modulation on the radar signal;
6) the modulation frequency of a frequency modulation on the radar signal;
7) the frequency sweep of a frequency modulation on the radar signal;
8) the phase of a phase modulation on the radar signal;
9) the modulation frequency of a phase modulation on the radar signal;
10) the duty cycle of a pulse modulation on the radar signal;
11) the modulation frequency of a pulse modulation on the radar signal;
12) the frequency stability of the received radar signal;
13) the phase noise of the radar signal.

Based on the fact whether the radar signal comprises a 50/60 Hz AM and/or FM modulation component, it can be determined, for example, whether the radar system is fed from a fixed supply voltage with a 50 Hz or a 60 Hz modulation frequency. Mobile police radar measurement systems are frequently fed from a car battery and consequently will not comprise a 50 or 60Hz modulation component.

Police radar systems sometimes use pulsed radar signals. Said pulsed radar signals have a specific character and can as such be recognised as "real" alarms.

Radar systems for traffic flow measurements frequently use very wide band frequency modulation, making it possible for them to be recognised as "false".

Inexpensive radar sources for automatic door openers, for example garages, can be recognised by their poor phase noise and frequency stability.

The central processing unit 1 is loaded with a computer programme designed for determining, on the basis of the combination of the characteristics thus determined, that the receipt of an alarm by a user is desired. If this chance is greater than a predetermined probability value, the user is alerted via the user interface 3 to the fact that a police radar trap has been detected. The aforesaid chance can be determined, for example, by means of an algorithm implemented in the computer programme, in which the determined characteristics are evaluated, which leads to a final decision on whether or not to deliver an alarm.

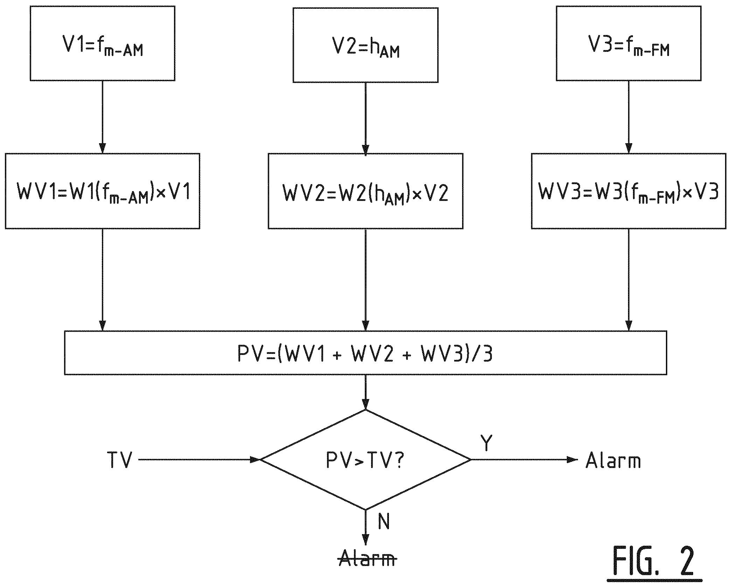

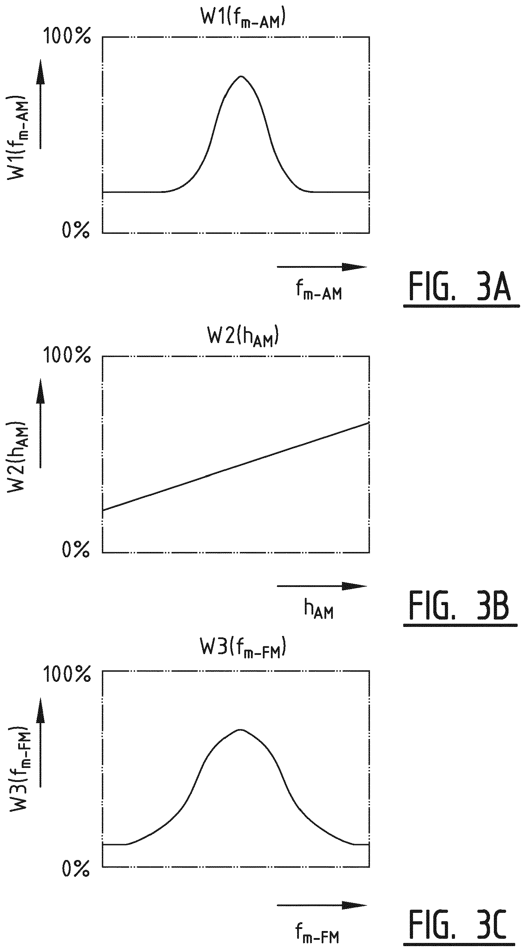

The algorithm preferably makes use of the "fuzzy logic" technique that is known per se. According to the simple embodiment shown in figure 2, the characteristics AM modulation frequency (f_{M-AM}), FM modulation depth (h_{AM}) and FM modulation frequency (f_{m-FM}) are determined by the device. Each of the determined characteristics is allocated a measured value (VI, V2, V3), which measured values (VI, V2, V3) are each multiplied by a weighting factor (W1, W2, W3) allocated to the characteristic in advance so as to obtain weighted characteristic values (WV1, WV2, WV3). Said weighting factors (W1, W2, W3) have been made dependent on the values (VI, V2, V3) of the characteristics according to predetermined functions shown in figures 3A, 3B, 3C, for example in the form of look-up tables or mathematical functions. Following that, the weighted characteristic values (WV1, WV2, WV3) are averaged to a signal profile value (PV), whereupon said signal profile value (PV) is compared with a threshold value (TV). Depending on the outcome of the comparison between the signal profile value (PV) and the threshold value (TV), an alarm is delivered or suppressed.

The device may furthermore comprise a database 4 of known profiles of radar signals that are specific for certain police radar speed measurement systems. Based on said list, an alarm can be directly generated as soon as a radar signal, within a certain tolerance, corresponds to a known police radar profile from the database. The radar detector system may also indicate the type and/or make of the police radar speed measurement system, for example in the form of a text on a display screen of the user interface 3 or in the form of a spoken text. The database 4 may also comprise known profiles of false radar signals that are specific for certain false alarm applications, such as radar systems for door openers or flow measurement systems. Based on said list, a received radar signal can be directly recognised as false and be suppressed as soon as the radar signal, within a certain tolerance, corresponds to a known false alarm radar profile from the database.

The device further comprises input means by which the user can teach the system when the delivery of an alarm is desired. This can for example be done in that the user presses a button during a radar alarm to indicate that the radar in question is a police radar. Based on said information, the system knows what profile properties are associated with the police radar system in question, and the algorithm can be adjusted.

By grouping the profiles from the database into police radar group profiles having (substantially) the same profile properties, it can be decided in the case of a next alarm whether said alarm falls within a specific police radar group profile and an alarm is to be delivered, therefore.

If an alarm fits both in the group profile of a real alarm and in the profile of a false alarm, this means that the system does not have sufficient information regarding the signal for taking an exact decision. In that case a decision as to which is most probably the right decision may be taken on the basis of the number of alarms in both profiles.

The device preferably comprises input means by which the user can teach the system when a radar signal concerns a false alarm. This can for example be done in that the user presses a button during a radar alarm to indicate that the alarm in question is a false alarm. Based on said information, the system knows what profile properties are associated with said false alarm, so that the next time a radar signal having the same (or practically the same) profile properties is received, the radar alarm can be suppressed. The system further comprises a self-learning function, wherein the specific signal properties of each detected signal are automatically registered in a database. On the basis of an analysis of all the stored profiles it can be determined to what extent profiles correspond to each other. Strongly corresponding profiles can be classed into so-called group profiles. Said group profiles can later be used for determining whether a received signal concerns a false alarm or a real alarm. This can take place in the system itself or via a central server where all the data are collected and processed.

The system preferably comprises the option that the self-learning effect is partially determined by the fact whether the radar signal was present at the same location, within a certain radius, for example a radius of 50 metres, as during a particular preceding period, for example the preceding week. Said location can be determined by means of a GPS system 5 connected to the central processor 1. It may be assumed that mobile police radar speed measurement systems are not set up at the same location every day. The number of times a radar signal is present at the same location thus indicates whether the signal in question concerns a real alarm or a false alarm. If the radar signal is invariably present at the same location, the system will assume that the signal is a false alarm signal, if the radar signal is occasionally present, the system will assume that it concerns a mobile police radar measurement system.

## Claims

1. A device for warning of radar traps, comprising a radar detection antenna (2), a central processing unit (1), which is connected to the radar detection antenna (2), an alert device (3), which is connected to the central processing unit (1) and which is designed for delivering an alarm, wherein the central processing unit (1) is designed for determining at least one characteristic of the signal received by the radar detection antenna (2) and for causing the alert device (3) to deliver an alarm or suppress the delivery of an alarm in dependence on said at least one determined characteristic,
wherein said at least one characteristic comprises:
the structure of the amplitude of the signal received by the radar detection antenna over a predetermined distance covered by the vehicle;
the modulation frequency of an amplitude modulation on the signal received by the radar detection antenna;
the modulation depth of an amplitude modulation on the signal received by the radar detection antenna;
the modulation frequency of a frequency modulation on the signal received by the radar detection antenna;
the frequency sweep of a frequency modulation on the signal received by the radar detection antenna;
the phase of a phase modulation on the signal received by the radar detection antenna;
the modulation frequency of a phase modulation on the signal received by the radar detection antenna;
the duty cycle of a pulse modulation on the signal received by the radar detection antenna;
the modulation frequency of a pulse modulation on the signal received by the radar detection antenna;
the frequency stability of the signal received by the radar detection antenna; or
the phase noise of the signal received by the radar detection antenna;
**characterized in that** the device further comprises a database (4); and
a self-learning function, wherein the values of the determined characteristics of each detected signal are stored in the database (4), and wherein it is determined on the basis of an analysis of the stored characteristics to what extent signals correspond to known signals, and in the case that signals correspond to known signals, said signals are allocated the same status as the known signal so as to cause an alarm to be delivered or suppressed upon detection of said signal.

2. A device according to claim 1, wherein the central processing unit (1) is designed for determining at least two, more preferably at least three, even more preferably at least four and most preferably all the aforesaid characteristics, and the central processing unit (1) is designed by means of an algorithm for causing the alert device (3) to deliver an alarm or suppress the delivery of an alarm in dependence on a combination of the determined characteristics.

3. A device according to claim 2, wherein the algorithm is a fuzzy logic algorithm.

4. A device according to claim 2 or 3, wherein according to the algorithm a measured value is allocated to each of the determined characteristics, wherein said measured values are each multiplied by a weighting factor allocated to the characteristic in advance, which weighting factors have been made dependent on the values of the characteristics in accordance with predetermined dependence functions so as to obtain weighted characteristic values, whereupon the weighted characteristic values are added to obtain a signal profile value, after which the signal profile value is compared to at least one threshold value, wherein, depending on the outcome of the comparison between the signal profile value and the threshold value an alarm is delivered or suppressed.

5. A device according to claim 4, wherein the threshold value is adjustable.

6. A device according to any one of the preceding claims, wherein besides said at least one characteristic the determined characteristics further comprise the frequency of the signal received by the radar detection antenna (2) .

7. A device according to any one of the preceding claims, wherein the device comprises input means (3) by means of which the user can indicate if the delivery of an alarm is to be suppressed and/or if an alarm is to be delivered upon detection of a radar signal, thereby changing the aforesaid algorithm.

8. A device according to claims 4 and 7, wherein said algorithm is changed by changing one or more of the aforesaid predetermined dependence functions of the weighting factors.

## Patentansprüche

1. Vorrichtung zur Warnung vor Radarfallen, mit einer Radar-Erkennungs-Antenne (2), einer zentralen Recheneinheit (1), welche mit der Radar-Erkennungs-Antenne (2) verbunden ist, einer Warn-Vorrichtung (3), welche mit der zentralen Recheneinheit (1) verbunden ist und welche ausgelegt ist, um einen Alarm zu liefern,
wobei die zentrale Recheneinheit (1) ausgelegt ist, mindestens ein Charakteristikum des von der Radar-Erkennungs-Antenne (2) empfangenen Signals zu ermitteln und um in Abhängigkeit von dem mindestens einen ermittelten Charakteristikum die Warn-Vorrichtung (3) zu veranlassen, einen Alarm zu liefern oder das Liefern eines Alarms zu unterdrücken,
wobei das mindestens eine ermittelte Charakteristikum umfasst:
die Struktur der Amplitude des Signals, welches von der Radar-Erkennungs-Antenne über eine vorbestimmte, vom Fahrzeug zurückgelegte Entfernung empfangen wurde;
die Modulations-Frequenz einer Amplituden-Modulation des Signals, welches von der Radar-Erkennungs-Antenne empfangen wurde;
die Modulations-Tiefe einer Amplituden-Modulation des Signals, welches von der Radar-Erkennungs-Antenne empfangen wurde;
die Modulations-Frequenz einer Frequenz-Modulation des Signals, welches von der Radar-Erkennungs-Antenne empfangen wurde;
der Frequenzdurchlauf einer Frequenz-Modulation des Signals, welches von der Radar-Erkennungs-Antenne empfangen wurde;
die Phase einer Phasen-Modulation des Signals, welches von der Radar-Erkennungs-Antenne empfangen wurde;
die Modulations-Frequenz einer Phasen-Modulation des Signals, welches von der Radar-Erkennungs-Antenne empfangen wurde;
der Abtastzyklus einer Puls-Modulation auf dem Signal, welches von der Radar-Erkennungs-Antenne empfangen wurde;
die Modulations-Frequenz einer Puls-Modulation auf dem Signal, welches von der Radar-Erkennungs-Antenne empfangen wurde;
die Frequenz-Stabilität des Signals, welches von der Radar-Erkennungs-Antenne empfangen wurde; oder
das Phasenrauschen des Signals, welches von der Radar-Erkennungs-Antenne empfangen wurde;
**dadurch gekennzeichnet, dass** die Vorrichtung ferner eine Datenbank (4) aufweist; und eine selbstlernende Funktion, wobei die Werte des ermittelten Charakteristikums jedes erkannten Signals in der Datenbank (4) gespeichert werden, und wobei auf der Basis einer Analyse der gespeicherten Charakteristika ermittelt wird, in welchem Ausmaß Signale mit bekannten Signalen übereinstimmen, und, wenn Signale mit bekannten Signalen übereinstimmen, den Signalen derselbe Status wie dem bekannten Signal zugewiesen wird, um zu bewirken, dass ein Alarm bei Erkennung des genannten Signals geliefert oder unterdrückt wird.

2. Vorrichtung nach Anspruch 1, wobei die zentrale Recheneinheit (1) ausgelegt ist, mindestens zwei, mehr bevorzugt mindestens drei, noch mehr bevorzugt mindestens vier und am meisten bevorzugt alle der vorgenannten Charakteristika zu ermitteln, und die zentrale Recheneinheit (1) ausgelegt ist, mittels eines Algorithmus die Warn-Vorrichtung (3) zu veranlassen in Abhängigkeit von einer Kombination der ermittelten Charakteristika einen Alarm zu liefern oder die Lieferung eines Alarms zu unterdrücken.

3. Vorrichtung nach Anspruch 2, wobei der Algorithmus ein Fuzzy-Logik-Algorithmus ist.

4. Vorrichtung nach Anspruch 2 oder 3, wobei gemäß des Algorithmus ein gemessener Wert jedem der ermittelten Charakteristika zugeordnet wird, wobei von den gemessenen Werten jeder mit einem dem Charakteristikum zuvor zugeordneten Wichtungsfaktor multipliziert wird, wobei die Wichtungsfaktoren in Übereinstimmung mit vorbestimmten Abhängigkeits-Funktionen abhängig von den Werten der Charakteristika, gemacht wurden, um gewichtete Werte der Charakteristika zu erhalten, woraufhin die gewichtete Werte der Charakteristika addiert werden, um einen Signal-Profil-Wert zu erhalten, wonach der Signal-Profil-Wert mit mindestens einem Schwellwert verglichen wird, wobei, abhängig von dem Ergebnis des Vergleichs zwischen dem Signal-Profil-Wert und dem Schwellwert ein Alarm geliefert oder unterdrückt wirsd.

5. Vorrichtung nach Anspruch 4, wobei der Schwellwert anpassbar ist.

6. Vorrichtung nach einem der vorhergehenden Ansprüche, wobei neben dem genannten mindestens einen Charakteristikum, die ermittelten Charakteristika ferner die Frequenz des von der Radar-Erkennungs-Antenne (2) empfangenen Signals umfassen.

7. Vorrichtung nach einem der vorhergehenden Ansprüche, wobei die Vorrichtung Eingabe-Mittel (3) umfasst, mit welchem der Nutzer angeben kann, ob ein Alarm nach Erkennung eines Radar-Signals unterdrückt werden soll und/oder ob ein Alarm geliefert werden soll, wodurch der Algorithmus verändert wird.

8. Vorrichtung nach den Ansprüchen 4 und 7, wobei der Algorithmus durch Änderung einer oder mehrere der zuvor genannten vorbestimmten Abhängigkeits-Funktionen des Wichtungsfaktors geändert wird.

## Revendications

1. Dispositif d'avertissement de contrôles radar, comprenant une antenne de détection de radar (2), une unité centrale de traitement (1), qui est connectée à l'antenne de détection de radar (2), un dispositif d'alerte (3), qui est connecté à l'unité centrale de traitement (1) et qui est conçu de manière à émettre une alarme, dans lequel l'unité centrale de traitement (1) est conçue de manière à déterminer au moins une caractéristique du signal reçu par l'antenne de détection de radar (2) et à amener le dispositif d'alerte (3) à émettre une alarme ou à supprimer l'émission d'une alarme en fonction de ladite au moins une caractéristique déterminée ;
dans lequel ladite au moins une caractéristique comporte :
la structure de l'amplitude du signal reçu par l'antenne de détection de radar sur une distance prédéterminée couverte par le véhicule ;
la fréquence de modulation d'une modulation d'amplitude sur le signal reçu par l'antenne de détection de radar ;
la profondeur de modulation d'une modulation d'amplitude sur le signal reçu par l'antenne de détection de radar ;
la fréquence de modulation d'une modulation de fréquence sur le signal reçu par l'antenne de détection de radar ;
le balayage de fréquence d'une modulation de fréquence sur le signal reçu par l'antenne de détection de radar ;
la phase d'une modulation de phase sur le signal reçu par l'antenne de détection de radar ;
la fréquence de modulation d'une modulation de phase sur le signal reçu par l'antenne de détection de radar ;
le cycle de service d'une modulation d'impulsion sur le signal reçu par l'antenne de détection de radar ;
la fréquence de modulation d'une modulation d'impulsion sur le signal reçu par l'antenne de détection de radar ;
la stabilité de fréquence du signal reçu par l'antenne de détection de radar ; ou
le bruit de phase du signal reçu par l'antenne de détection de radar ;
**caractérisé en ce que** le dispositif comporte en outre une base de données (4) ; et une fonction d'autoapprentissage, dans lequel les valeurs des caractéristiques déterminées de chaque signal détecté sont stockées dans la base de données (4), et dans lequel il est déterminé, sur la base d'une analyse des caractéristiques stockées, dans quelle mesure des signaux correspondent à des signaux connus, et dans le cas où des signaux correspondent à des signaux connus, lesdits signaux se voient affecter le même état que le signal connu afin d'occasionner l'émission ou la suppression d'une alarme suite à la détection dudit signal.

2. Dispositif selon la revendication 1, dans lequel l'unité centrale de traitement (1) est conçue de manière à déterminer au moins deux, de préférence au moins trois, de manière encore plus préférée au moins quatre, et idéalement toutes les caractéristiques susmentionnées, et l'unité centrale de traitement (1) est conçue au moyen d'un algorithme de manière à amener le dispositif d'alerte (3) à émettre une alarme ou à supprimer l'émission d'une alarme en fonction d'une combinaison des caractéristiques déterminées.

3. Dispositif selon la revendication 2, dans lequel l'algorithme est un algorithme à logique floue.

4. Dispositif selon la revendication 2 ou 3, dans lequel, selon l'algorithme, une valeur mesurée est affectée à chacune des caractéristiques déterminées, dans lequel lesdites valeurs mesurées sont chacune multipliées par un facteur de pondération affecté à la caractéristique à l'avance, lesquels facteurs de pondération ont été rendus dépendants des valeurs des caractéristiques conformément à des fonctions de dépendance prédéterminées de manière à obtenir des valeurs de caractéristiques pondérées, après quoi les valeurs de caractéristiques pondérées sont additionnées en vue d'obtenir une valeur de profil de signal, après quoi la valeur de profil de signal est comparée à au moins une valeur de seuil, dans lequel, selon le résultat de la comparaison entre la valeur de profil de signal et la valeur de seuil, une alarme est émise ou supprimée.

5. Dispositif selon la revendication 4, dans lequel la valeur de seuil est réglable.

6. Dispositif selon l'une quelconque des revendications précédentes, dans lequel, outre ladite au moins une caractéristique, les caractéristiques déterminées comportent en outre la fréquence du signal reçu par l'antenne de détection de radar (2).

7. Dispositif selon l'une quelconque des revendications précédentes, dans lequel le dispositif comporte des moyens d'entrée (3) au moyen desquels l'utilisateur peut indiquer si l'émission d'une alarme doit être supprimée et/ou si une alarme doit être émise suite à la détection d'un signal radar, modifiant par conséquent l'algorithme susmentionné.

8. Dispositif selon les revendications 4 et 7, dans lequel ledit algorithme est modifié en modifiant une ou plusieurs des fonctions de dépendance prédéterminées susmentionnées des facteurs de pondération.
